# EUROPEAN PATENT SPECIFICATION

(11) **EP 2 094 536 B1**
(45) Date of publication and mention of the grant of the patent: **14.07.2010**
(21) Application number: 06847288.5
(22) Date of filing: 21.11.2006
(51) Int. Cl.: B60R 16/03, B60R 25/00

(54) **TRUCK AND BODYBUILDER MODULE FOR THIS TRUCK, METHOD, MEMORY AND SOFTWARE TO CONFIGURE THE BODYBUILDER MODULE**
LASTWAGEN UND KAROSSERIEBAUMODUL FÜR DIESEN LASTWAGEN, VERFAHREN, SPEICHER UND SOFTWARE ZUR KONFIGURATION DES KAROSSERIEBAUMODULS
CAMION ET MODULE DE CARROSSERIE POUR CE CAMION, PROCEDE, MEMOIRE ET LOGICIEL POUR CONFIGURER LE MODULE DE CARROSSERIE

(43) Date of publication of application: 02.09.2009
(73) Proprietor: RENAULT TRUCKS, 69800 Saint Priest (FR)
(72) Inventor: MOLINA, Franck Paul Germain, 01240 Dompierre Sur Veyle (FR); SCHMIDT, Roger, 69100 Villeurbanne (FR)
(74) Representative: Putet, Gilles
(86) International application number: PCT/IB2006/004066
(87) International publication number: WO 2008/062255

(56) References cited:
- EP-A2- 0 811 528
- EP-B1- 1 196 310
- WO-A-2005/095165

## Description

### TECHNICAL FIELD OF THE INVENTION

The present invention relates to a truck and a bodybuilder electronic module for this truck, a method, a memory and a software to configure the bodybuilder electronic module.

### BACKGROUND OF THE INVENTION

Typically, a truck includes:
- a plurality of electronic control units able to control actuators of the truck and/or sensors, the control unit and the sensors being able to generate respective data that represent the operative state of the truck,
- a bus linking together the electronic control units and the sensors,
- a bodybuilder electronic module connected to the bus, the electronic module comprising an auxiliary unit connection to connect an auxiliary unit chosen amongst a plurality of different auxiliary units which can be installed on this truck, each auxiliary unit being able to drive an auxiliary equipment added to the truck after its construction, this connection being able to transmit, to the auxiliary unit, information on the operating state of the truck which is built from data read on the bus, and
- a configuration connection to connect and, alternatively, to disconnect a configuration computer to the bodybuilder electronic module,

Bodybuilders are companies that install auxiliary units on the trucks. The auxiliary units drive auxiliary equipments like a movable container, a pump, a tank, a rubbish compactor and so on.

For example, the auxiliary units comprise a motor that drive a shaft, a valve, a cylinder or other actuators of the auxiliary equipment.

The auxiliary units need to be triggered or stopped depending on the state of operation of the truck. For example, the auxiliary units have to lift a container only if the park brake is on.

Thus, auxiliary units need to retrieve data from the bus of the truck.

EP 1 196 310 discloses a bodybuilder electronic module which is called a remote interface module. This module includes a plug to connect the auxiliary unit. It is also possible to configure which output pin of the plug will be used and which vehicle data will be outputted through it. To this end, specific functions and tables are implemented within an ECS (Electrical System Controller) of the truck. The ECS is connected to the remote interface module through the bus.

Harmful modifications can be done because the specific functions and tables are directly implemented within the ECS. Accordingly, configuration of the remote interface module can only be done during the truck manufacturing process by specialized persons.

### SUMMARY OF THE INVENTION

Accordingly, it is an object of the invention to provide a truck with a bodybuilder electronic module that can be used by bodybuilders while preserving a high level of flexibility.

The invention provides a truck having a bodybuilder electronic module comprising:
- a first non-volatile memory zone, content of which cannot be modified through the configuration connection, the first non-volatile memory zone storing a first predetermined list of authorized mathematical operators and a second predetermined list of a plurality of authorized operands, each operand corresponding to a data generated by one of the electronic control units or one of the sensors,
- a second non-volatile memory zone, content of which can be modified through the configuration connection, the second non-volatile memory zone storing information defining a mathematical operation, the mathematical operation being formed by a combination of operators and operands,
- a microprocessor able:
   - to execute the mathematical operation defined by the information stored in the second non-volatile memory zone only if each of the operators and operands of the defined mathematical operation matches an authorized operator or operand stored in the first non-volatile memory zone, and
   - to transmit the result of the executed mathematical operation to the auxiliary unit through the auxiliary unit connection.

The above bodybuilder electronic module has the ability to satisfy the need of very different bodybuilders because the information retrieved from the auxiliary unit connection can be a combination of a plurality of data transmitted on the truck bus. Thus, the above bodybuilder electronic module is very flexible.

When using the above bodybuilder electronic module it is only possible to implement an operation which is harmless for the truck. This is due to the fact that only a predetermined set of mathematical operators and operands can be executed. Thus, the bodybuilder electronic module configuration can be done by the bodybuilder without any risk of causing any damage to the truck.

The embodiments of the above truck may comprise the following features:
- the bus is a CAN (Control Area Network) bus.

The invention also relates to a bodybuilder electronic module suitable to be implemented within the above truck.

The embodiments of the above bodybuilder electronic module may comprise one or several of the following features:
- an interface to directly connect the electronic module to the truck bus, this interface being only able to read data on the bus without being able to transmit data on this bus,
- the first list is only composed of Boolean operators and threshold comparators,
- the module also comprises a configuration connection to connect and, alternatively, to disconnect the configuration computer to the bodybuilder electronic module,
- the module also comprises a plug to connect and, alternatively, to disconnect the module to/from the truck bus,
- the auxiliary unit connection is also able to receive data from the auxiliary unit, and the second predetermined list of operands also includes an operand corresponding to the data received through the input pin,
- the second non-volatile memory zone stores information defining a threshold, and the microprocessor is able to compare data read on the bus to the defined threshold, and
- at least one configurable delay line able to delay the data read on the bus or on the input pin by a configurable time delay, and the second non-volatile memory zone includes information defining the time delay used in the configuration line.

The above embodiments of the bodybuilder electronic module present the following advantages:
- using an interface which is only able to read data on the bus increases the security because the electronic module cannot be used to alter the truck data. Furthermore, the electronic module can be implemented in a truck without requiring any configuration or modification of the truck;
- using only Boolean operators or comparators make the electronic module easier to program;
- including the configuration plug within the electronic module makes this electronic module safer because it does not need to use any other equipment embedded within the truck like for example the bus;
- providing the electronic module with a connector to connect it to the bus makes the installation of this electronic module easier;
- providing the electronic module with an auxiliary unit connection able to receive data from the auxiliary unit increases the flexibility of the electronic module; and
- providing the electronic module with delay lines and threshold further increases the flexibility of this electronic module.

The invention also relates to a method to configure the above bodybuilder electronic module, the method comprising:
- providing the above bodybuilder electronic module,
- displaying mathematical operators and operands in respective list zones, each list zone being populated only with the authorized mathematical operators and operands, respectively,
- acquiring the operator and operand selected by an operator in the list zone to define a mathematical operation, and
- downloading the defined mathematical operation into the second non-volatile memory zone from a computer connected to the electronic module through the configuration plug.

The invention also relates to a memory and a software including instructions to execute the above method to configure the bodybuilder electronic module when those instructions are executed by a computer.

These and other aspects of the invention will be apparent from the following description, drawings and claims.

### BRIEF DESCRIPTION OF THE DRAWINGS

Figure 1 is a schematic diagram of a vehicle equipped with a bodybuilder electronic module;
Figure 2 is a more detailed view of the bodybuilder electronic module used in the vehicle of figure 1;
Figure 3 is a schematic diagram of a display of a software used to configure the bodybuilder electronic module of figure 2; and
Figure 4 is a flowchart of a method to configure the bodybuilder electronic module of figure 2.

In the drawings, the same reference numbers are used to designate the same elements.

### DETAILED DESCRIPTION OF SOME EMBODIMENTS

In the following description, well-known functional constructions by a person of ordinary skill in the art are not described in details.

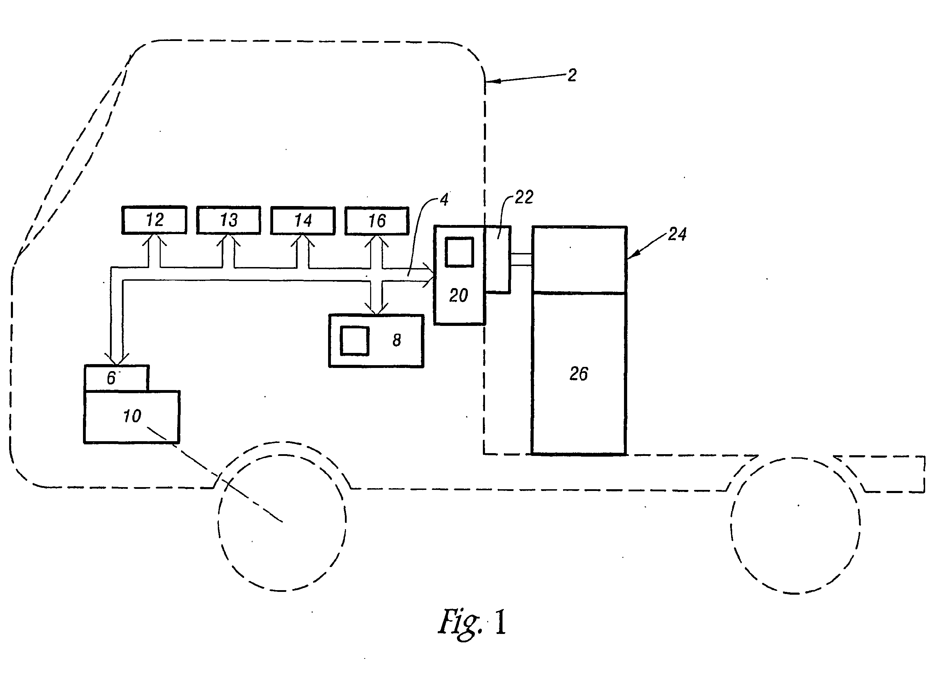

Figure 1 shows an automotive vehicle. More precisely, figure 1 shows a truck 2.

Truck 2 includes many ECU (Electronic Control Units) and sensors which are connected to each other through a serial data bus 4. For example, bus 4 is a multicast bus like a CAN (Controller Area Network) bus. ECUs are embedded systems that control one or more of the electrical subsystems of the truck. Some trucks may have up to thirty ECUs. For example, truck 2 includes the following ECU:
- engine control unit,
- transmission control unit (TCU),
- man machine interface (MMI),
- door control unit,
- seat control unit,
- climate control unit,
- anti-lock braking system (ABS) unit or Electronic Braking System (EBS) unit.

For simplicity, only engine control unit 6 and EBS unit 8 have been illustrated in figure 1.

Unit 6 controls an engine 10 that drives truck wheels.

Unit 6 is able to generate and transmit data on bus 4. For example, engine 6 transmits data like engine speed and engine torque.

For simplicity, only the following sensors are represented in figure 1 as being connected to bus 4:
- a sensor 12 that outputs the park brake state on bus 4,
- a sensor 13 that outputs the vehicle speed on bus 4,
- a sensor 14 that transmits the clutch state on bus 4,
- a sensor 16 that transmits Boolean data indicating that the transmission is in the neutral state or not.

A bodybuilder electronic module 20 is also directly connected to bus 4. Electronic module 20 is also connected by a plug 22 to an auxiliary unit 24. Auxiliary unit 24 is permanently mounted on truck 2. For example, auxiliary unit 24 is an electrical motor, a thermal motor or a pump that is used to drive auxiliary equipment 26.

Auxiliary equipment 26 is permanently mounted in vehicle 2. For example, equipment 26 is a tank, a movable container, a valve, a hydraulic/automatic cylinder, a compactor.

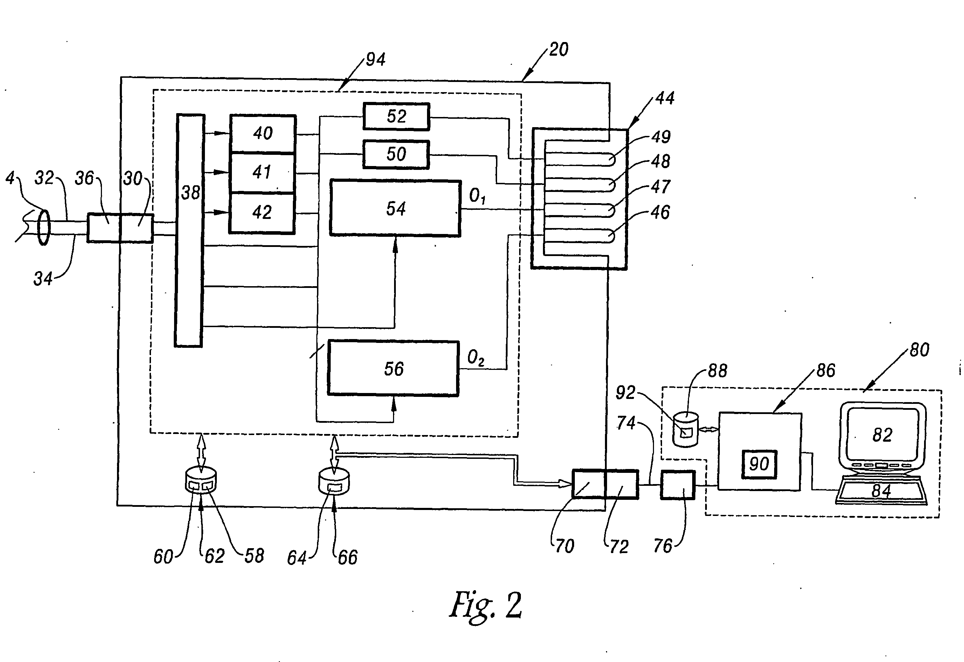

Figure 2 shows in more details bodybuilder electronic module 20.

Electronic module 20 has a plug 30 to connect electronic module 20 to bus 4 and, alternately, to disconnect electronic module 20 from bus 4. Thus, module 20 takes the form of a removable box that includes every electronic components necessary to interface auxiliary unit 24 to bus 4.

As shown in figure 2, bus 4 includes two wires 32 and 34 to transmit data. Preferably, wires 32 and 34 are twisted wires.

Bus 4 has a corresponding plug 36 intended to fit into plug 30.

Plug 30 is directly connected through two wires to an interface 38 which is only able to read data on bus 4. For example, interface 38 is able to read the following data:
- engine speed,
- vehicle speed,
- engine torque,
- neutral state,
- clutch state,
- park brake state.

The engine speed, vehicle speed and engine torque are numerical values. The neutral state, clutch state and park brake state are Boolean values.

In this embodiment, the numerical values are sent to respective comparators 40-42. Each comparator 40-42 compares the numerical values to a respective threshold Sᵢ which can be, configured. The output of comparator 40-42 is a Boolean value equal to "1" if the numerical value is superior to threshold Sᵢ and, otherwise, equal to "0".

Electronic module 20 has a connection to transmit data and receive data from auxiliary unit 24. Here, this connection is a plug 44 designed to fit into plug 22 to electrically connect auxiliary unit 24 to electronic module 20. In this example, plug 44 has four pins 46 to 49. Pins 46 and 47 are output pins that output information from truck 2 to auxiliary unit 24. Pins 48 and 49 are input pins that receive information from auxiliary unit 24. Pins 48 and 49 are directly connected through respective delay lines 50 and 52 to respective inputs of calculators 54 and 56. Outputs of comparator 40 to 42 as well as the Boolean value received through interface 38 are also connected to respective inputs of calculators 54 and 56.

Each calculator 54 and 56 is able to execute a mathematical operation which involves data read on bus 4 and data received through input pins 48 and 49. The data that can be used as operand in the mathematical operation are defined in a list 58. The mathematical operators that can be used in this mathematical operation are defined in a list 60. Lists 58 and 60 are stored in a non-volatile memory 62. For example, list 58 includes the following data:
- engine speed,
- vehicle speed,
- engine torque,
- neutral state,
- clutch state,
- park brake state,
- input pins 48 and 49, and
- a logical "0".

List 60 only includes Boolean operators. For example, list 60 includes the following Boolean operators: AND, XOR, OR and NOT.

The mathematical operation executed by calculators 54 and 56 is defined in a list 64 stored in a non-volatile memory 66. List 64 specifies for each mathematical operation to be executed which data in list 58 are to be used as operand and which operator in list 60 has to be used. For example, list 64 contains references or pointers to the operators and operands of lists 58 and 60.

Accordingly, calculators 54 and 56 are only able in this embodiment to execute Boolean operations.

Each calculator 54 and 56 has a respective output O₁ and O₂ connected to pins 47 and 46, respectively. Electronic module 20 also includes a configuration connection to received configuration data from an internal computer. Here, this connection is a plug 70 through which is received list 64. Plug 70 can only be used to store new data in memory 66 but not in memory 62. Thus, lists 58 and 60 are not modifiable through plug 70.

Plug 70 is designed to fit into an external plug 72 which is fixed at the extremity of a wire 74 connecting an adapter 76 to electronic module 20. Adapter 76 is for example able to convert data received through a standard bus, like USB or RS232 bus into data transmitted on wire 74. This standard bus is connected to an external computer 80. Computer 80 has a screen 82, a keyboard 84, a central unit 86 and a memory 88.

Central unit 86 includes at least one microprocessor 90 able to execute instructions recorded in memory 88. A software 92 is stored in memory 88. The software 92 includes instructions to define a mathematical operation suitable to be executed by electronic module 20 and to download the defined mathematical operation as list 64 in memory 66 through adapter 76, connection 74 and plugs 72 and 70, when executed.

Interface 38, comparators 40-42, delay lines 50, 52 and calculators 54 and 56 are implemented through the use of a microprocessor 94. To this end, microprocessor 94 executes instructions recorded in memory 62, for example.

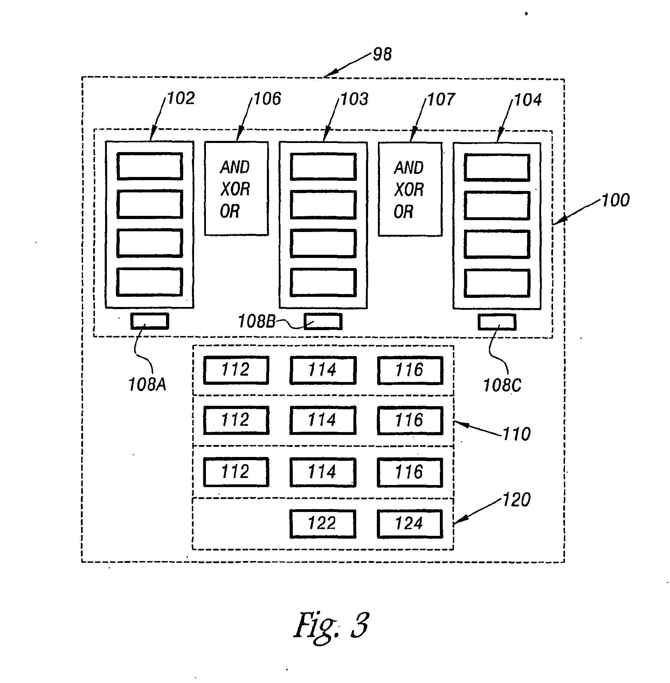

Figure 3 shows a window 98 displayed on screen 82 when software 92 is executed by microprocessor 90. This screen includes a first area 100 to define the mathematical operation to be executed by electronic module 20. Area 100 includes three list zones 102-104. Each list zone is populated with the name of the data which can be used as operand by electronic module 20. Each name corresponds to a data stored in list 58. Each zone 102-104 allows to select at most one of these names.

Area 100 also includes two list zones 106 and 107. Zone 106 includes three names, each one corresponding to one of the operator names stored in list 60. The user can select at most one of the names in zone 106. Zone 106 defines the operators that operate on the data selected in zone 102 and 103.

For example, zone 107 is identical to zone 106. Zone 107 selects the operator that will operate on the data selected in zones 103 and 104.

Area 100 also includes three buttons 108A, 108B and 108C placed under list zones 102-104, respectively. When one of these buttons 108A, 108B and 108C is selected, the operation NOT is applied to the data selected in the list zone just above.

Window 98 also includes a second area 110 used to configure the threshold Sᵢ of comparators 40-42, respectively. For example, area 110 is divided into three lines, each line corresponding to one of the comparators 40-42. A first field 112 in each line indicates the name of the data on which operates the corresponding comparator. The line also includes a second and a third field 114, 116. Field 114 is designed to receive the numerical value of the threshold Sᵢ. Field 116 is designed to receive a numerical value that defines a hysterisis that applies on this threshold value input in field 114.

Finally, window 98 has a third area 120 that includes two fields 122 and 124 designed to receive numerical values that correspond to the time delays that delay lines 50 and 52 will implement, respectively.

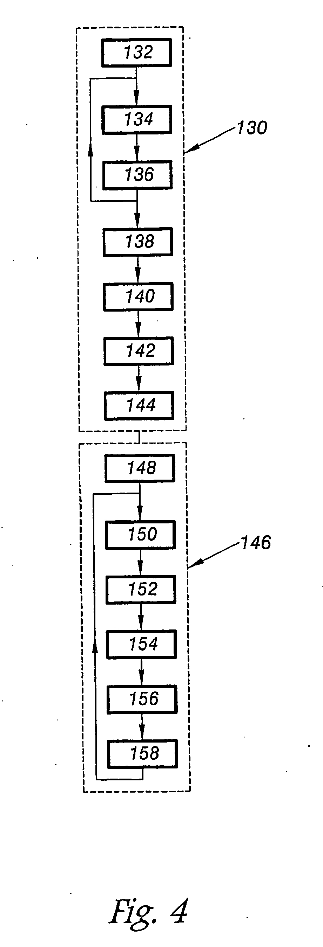

The operation of truck 2 and software 92 will now be described with reference to figure 4.

Initially, during a phase 130, an operator defines the mathematical operations to be executed by electronic module 20.

At the beginning of phase 130, in step 132, the computer 80 is connected to electronic module 20 through adapter 76, wire 74 and plugs 72-70.

Thereafter, in step 134, the operator selects in each zones 102, 103 and 104 the operands to be used in the mathematical operation. Subsequently, in step 136, the operator selects in zones 106 and 107 the operators to apply to the operands.

Step 134 and 136 can be iterated for each mathematical operation to be executed by calculators 54 and 56.

In step 138, using the field in area 110, the operator can also specifies the threshold values to be used by comparators 40-42.

In step 140, the operator enters the time delay to be implemented by delay lines 50 and 52.

Subsequently, in step 142, when the operator has finished the definition of the mathematical operation to be executed, computer 80 downloads in memory 66 a new list 64 defining the operands and the operators to be used. During step 142, the new thresholds and new delays are also stored in memory 66.

Thereafter, in step 144, the operator disconnects computer 80 from electronic module 20 by unplugging plug 72.

Once electronic module 20 has been configured, in step 148, auxiliary unit 24 is connected to electronic module 20 through the use of plugs 22 and 44. Thereafter, electronic module 20 is activated to provide the required information to auxiliary unit 24.

In step 150, electronic control unit 10 and sensors 12, 14 and 16 generate and transmit data through bus 4.

In step 152, interface 38 reads the values for the data specified in list 64. Then in step 154, calculators 54 and 56 execute the mathematical operations with the newly received values. The executed mathematical operations are the ones defined in list 64.

In step 156, the results of the mathematical operations are outputted to respective pins 46 and 47.

Subsequently, auxiliary unit 24 receives these results and operates the auxiliary equipment 26 according to these new results.

Steps 150 to 158 are iterated as long as electronic module 20 is activated.

If by error our due to wrong manipulations, list 64 defines a mathematical operation that uses operands or operators that do not match the ones stored in lists 58 and 60, the mathematical operation is not executed and no result is outputted on outputs O₁ or O₂. Thus, steps 154 to 158 are not executed.

It should be noticed that the configuration of electronic module 20 can be replaced by a new configuration at any time by connecting once again computer 80 to electronic module 20.

Many other embodiments are possible. For example, the first and second memories 62 and 66 may correspond to separate zones of the same memory. Similarly, the auxiliary unit plug 44 and configuration plug 70 may be housed within the same connector

In another embodiment, the configuration plug 70 is housed outside electronic module 20. For example, the configuration plug is directly connected to bus 4 and can be used to configure electronic module 20 but also other configurable truck equipments connected to bus 4.

Still in another embodiment, memories 62 and 66 are housed outside electronic module 20. For example, memories 62 and 66 are connected to electronic module 20 through bus 4.

The wired link between module 20 and the auxiliary unit 24 or between module 20 and computer 80 can be replaced by a wireless link according to a standard protocol like WiFi or Bluetooth.

Module 20 may also comprise some additional imputs to be directly connected to sensors or ECUs without passing through bus 4.

Comparators 40-42 can be omitted. If module 20 only reads Boolean data on bus 4.

Delay line 50, 52 can also be omitted. In contrast, in another embodiment, additional delay lines can be added at the output of comparators 40-42 or at the output of interface 38 to delay Boolean value. Delay lines can also be added at the outputs O₁ and O₂.

Comparators can be added to compare data received on pins 48 or 49 to a predetermined threshold.

List 64 may also contain operands and operators. Thus, in this embodiment, the operands and operators of list 64 are compared to the ones stored in lists 58 and 60 before executing the operation defined in list 64. In case every operand and operator matches one operand or operator of lists 58 and 60, the operation stored in list 64 is executed: Otherwise, the stored operation is not executed.

### LIST OF REFERENCES

- 2: Truck
- 4: Bus
- 6: ECU
- 8: ABS
- 12,14,16: Sensors
- 20: Bodybuilder electronic module
- 22: Plug
- 24: Auxiliary unit
- 26: Auxiliary equipment
- 30,36: Plugs
- 32,34: Wires
- 38: Interface
- 40-42: Comparators
- 44: Auxiliary unit plug
- 46-49: Pins
- 50,52: Delay lines
- 54,56: Calculator
- 38,60,64: Lists
- 62,66: Memories
- 70,72: Configuration plugs
- 74: Connection
- 76: Adapter
- 80: Computer
- 82,84: Screen, Keyboard
- 88: Memory
- 86: Central unit
- 90: Microprocessor
- 92: Software
- 94: Microprocessor
- 100,110,120: Areas
- 102,103,104: List zones
- 106,107: List zones
- 108A, 108B, 108C: Buttons
- 112,114,116,122,124: Fields

## Claims

1. Truck comprising:
- a plurality of electronic control units (6,8) able to control actuators of the truck and/or sensors, the control units and the sensors being able to generate respective data that represent the operative state of the truck,
- a bus (4) linking together the electronic control units and the sensors,
- a bodybuilder electronic module (20) connected to the bus, the electronic module comprising an auxiliary unit connection (44) to connect an auxiliary unit (24) chosen amongst a plurality of different auxiliary units which can be installed on this truck, each auxiliary unit being able to drive an auxiliary equipment added to the truck after its construction, this connection being able to transmit, to the auxiliary unit, information on the operating state of the truck which is built from data read on the bus, and
- a configuration connection (70) to connect and, alternatively, to disconnect a configuration computer to the bodybuilder electronic module,
wherein the truck further comprises:
- a first non-volatile memory zone (62), content of which cannot be modified through the configuration connection, the first non-volatile memory zone storing a first predetermined list of authorized mathematical operators and a second predetermined list of a plurality of authorized operands, each operand corresponding to a data generated by one of the electronic control units or one of the sensors,
- a second non-volatile memory zone (66), content of which can be modified through the configuration connection, the second non-volatile memory zone storing information defining a mathematical operation, the mathematical operation being formed by a combination of operators and operands,
- a microprocessor (94.) able:
- to execute the mathematical operation defined by the information stored in the second non-volatile memory zone only if each of the operators and operands of the defined mathematical operation matches an authorized operator or operand stored in the first non-volatile memory zone, and
- to transmit the result of the executed mathematical operation to the auxiliary unit through the auxiliary unit connection.

2. The truck of claim 1, wherein the bus (4) is a CAN (Controller Area Network) bus.

3. A bodybuilder electronic module suitable to be implemented within a truck according to any one of the preceding claim, wherein the module comprises:
- an auxiliary unit connection (44) to connect an auxiliary unit (24) chosen amongst a plurality of different auxiliary units which can be installed on this truck, each auxiliary unit being able to drive an auxiliary equipment (26) added to the truck after its construction, this auxiliary unit connection being able to transmit, to the auxiliary unit, information on the operating state of the truck which is built from data read on the bus,
- a first non-volatile memory zone (62), content of which cannot be modified through the configuration connection, the first non-volatile memory zone storing a first predetermined list of authorized mathematical operators and a second predetermined list of a plurality of authorized operands, each operand corresponding to a data generated by one of the electronic control units or one of the sensors
- a second non-volatile memory zone (66), content of which can be modified through the configuration connection, the second non-volatile memory zone storing information defining a mathematical operation, the mathematical operation being foamed by a combination of operators and operands,
- a microprocessor (94) able:
- to execute the mathematical operation defined by the information stored in the second non-volatile memory zone only if each of the operators and operands of the defined mathematical operation matches an authorized operator or operand stored in the first non-volatile memory zone, and
- to transmit the result of the executed mathematical operation to the auxiliary unit through the auxiliary unit connection.

4. The module according to claim 3, wherein the electronic module also includes an interface (38) to directly connect the electronic module to the truck bus (4), this interface being only able to read data on the bus without being able to transmit data on this bus.

5. The module according to claim 3 or 4, wherein the first list is only composed of Boolean operators and threshold comparators.

6. The module according to any one of claims 3 to 5, wherein the module also comprises a configuration connection (70) to connect and, alternatively, to disconnect the configuration computer to the bodybuilder electronic module.

7. The module according to any one of claims 3 to 6, wherein the module also comprises a plug (30) to connect and, alternatively, to disconnect the module to/from the truck bus.

8. The module according to any one of claims 3 to 7, wherein the auxiliary unit connection (44) is also able to receive data from the auxiliary unit, and wherein the second predetermined list of operands also includes an operand corresponding to the data received through the input pin.

9. The module according to any one of claims 3 to 8, wherein the second non-volatile memory zone (66) stores information defining a threshold, and wherein the microprocessor is able to compare data read on the bus to the defined threshold.

10. The module according to any one of claims 3 to 9, wherein the module comprises at least one configurable delay line (50,52) able to delay the data read on the bus or through the auxiliary unit connection by a configurable time delay, and wherein the second non-volatile memory zone (66) includes information defining the time delay used in the configuration line.

11. The module according to any one of claims 3 to 10, wherein the auxiliary unit connection is a plug able to connect and, alternatively, disconnect the auxiliary unit.

12. A method to configure a bodybuilder electronic module of a truck, the method comprising:
- providing the bodybuilder electronic module with:
• an auxiliary unit connection (44) to connect an auxiliary unit chosen amongst a plurality of different auxiliary units which can be installed on this truck, each auxiliary unit being able to drive an auxiliary equipment added to the truck after its construction, this auxiliary unit connection being able to transmit, to the auxiliary unit, information on the operating state of the truck which is built from data read on the bus,
• a first non-volatile memory zone (62), content of which cannot be modified through the configuration connection, the first non-volatile memory zone storing a first predetermined list of authorized mathematical operators and a second predetermined list of a plurality of authorized operands, each operand corresponding to a data generated by one of the electronic control units or one of the sensors,
• a second non-volatile memory zone (66), content of which can be modified through the configuration connection, the second non-volatile memory zone storing information defining a mathematical operation, the mathematical operation being formed by a combination of operators and operands,
• a microprocessor (94) able:
- to execute the mathematical operation defined by the information stored in the second non-volatile memory zone only if each of the operators and operands of the defined mathematical operation matches an authorized operator or operand stored in the first non-volatile memory zone, and
- to transmit the result of the executed mathematical operation to the auxiliary unit through the auxiliary unit connection,
wherein the method comprises :
- displaying mathematical operators and operands in respective list zones, each list zone being populated only with the authorized mathematical operators and operands, respectively,
- acquiring the operator and operand selected by an operator in the list zone to define a mathematical operation, and
- downloading the defined mathematical operation into the second non-volatile memory zone from a computer connected to the module through the configuration connection.

13. A memory (88) including instructions to execute a method according to claim 12, to configure a bodybuilder electronic module of a truck when the instructions are executed by a computer.

14. A software including instructions to execute a method according to claim 12, to configure a bodybuilder electronic module of a truck when the instructions are executed by a computer.

## Patentansprüche

1. Lastwagen mit
- einer Vielzahl von elektronischen Steuereinheiten (6,8), die Stellglieder des Lastwagens und/oder Sensoren steuern können, wobei die Steuereinheiten und die Sensoren jeweilige Daten erzeugen können, die den Betriebszustand des Lastwagens repräsentieren,
- einem die elektronischen Steuereinheiten und die Sensoren verbindenden Bus (4),
- einem mit dem Bus verbundenen elektronischen Bodybuilder-Modul (20), wobei das elektronische Modul einen Zusatzeinheitsanschluss (44) für einen Anschluss einer Zusatzeinheit (24), die aus einer Vielzahl verschiedener Zusatzeinheiten ausgewählt wird, die an diesem Lastwagen eingebaut werden können, umfasst, wobei jede Zusatzeinheit eine dem Lastwagen nach seiner Konstruktion zugefügte Zusatzausstattung antreiben kann, wobei dieser Anschluss an die Zusatzeinheit Informationen über den Betriebszustand des Lastwagens übertragen kann, der aus den an den Bus gelesenen Daten aufgebaut ist, und
- einem Konfigurationsanschluss (70) zur Verbindung und, alternativ, zur Trennung eines Konfigurationscomputers mit bzw. von dem elektronischen Bodybuilder-Modul,
wobei der Lastwagen außerdem umfasst:
- eine erste Nichtflüchtigspeicherzone (62), deren Inhalt über den Konfigurationsanschluss modifiziert werden kann, wobei die erste Nichtflüchtigspeicherzone eine erste vorherbestimmte Liste autorisierter mathematischer Operatoren und eine zweite vorherbestimmte Liste einer Vielzahl von autorisierten Operanden speichert, wobei jeder Operand Daten entspricht, die durch eine der elektronischen Steuereinheiten oder einen der Sensoren erzeugt werden,
- eine zweite Nichtflüchtigspeicherzone (66), deren Inhalt durch den Konfigurationsanschluss modifiziert werden kann, wobei die zweite Nichtflüchtigspeicherzone Informationen speichert, die eine mathematische Operation definieren, wobei die mathematische Operation von einer Kombination aus Operatoren und Operanden gebildet wird,
- einen Mikroprozessor (94), der
- die mathematische Operation, die durch die in der zweiten Nichtflüchtigspeicherzone gespeicherten Informationen definiert ist, nur ausführen kann, wenn jeder der Operatoren und Operanden der definierten mathematischen Operation mit einem autorisierten Operator oder Operanden übereinstimmt, der in der ersten Nichtflüchtigspeicherzone gespeichert ist, und
- das Ergebnis der ausgeführten mathematischen Operation an die Zusatzeinheit über den Zusatzeinheitsanschluss übertragen kann.

2. Lastwagen nach Anspruch 1, wobei der Bus (4) ein CAN- (Controller Area Network) Bus ist.

3. Elektronisches Bodybuilder-Modul, das in einem Lastwagen nach einem der vorhergehenden Ansprüche installiert werden kann, wobei das Modul umfasst:
- einen Zusatzeinheitsanschluss (44) für einen Anschluss einer Zusatzeinheit (24), die aus einer Vielzahl von verschiedenen Zusatzeinheiten ausgewählt wird, die an diesem Lastwagen eingebaut werden können, wobei jede Zusatzeinheit eine Zusatzausstattung (26) antreiben kann, die dem Lastwagen nach seiner Konstruktion hinzugefügt worden ist, wobei dieser Zusatzeinheitsanschluss an die Zusatzeinheit Informationen über den Betriebszustand des Lastwagens übertragen kann, die aus den Daten aufgebaut sind, die an dem Bus gelesen werden,
- eine erste Nichtflüchtigspeicherzone (62), deren Inhalt nicht durch den Konfigurationsanschluss modifiziert werden kann, wobei die erste Nichtflüchtigspeicherzone eine erste vorherbestimmte Liste autorisierter mathematischer Operatoren und eine zweite vorherbestimmte Liste einer Vielzahl von autorisierten Operanden speichert, wobei jeder Operand Daten entspricht, die durch eine der elektronischen Steuereinheiten oder einen der Sensoren erzeugt werden,
- eine zweite Nichtflüchtigspeicherzone (66), deren Inhalt durch den Konfigurationsanschluss modifiziert werden kann, wobei die zweite Nichtflüchtigspeicherzone Informationen speichert, die eine mathematische Operation definieren, wobei die mathematische Operation von einer Kombination aus Operatoren und Operanden gebildet wird,
- einen Mikroprozessor (94), der
- die mathematische Operation, die durch die in der zweiten Nichtflüchtigspeicherzone gespeicherten Informationen definiert ist, nur ausführen kann, wenn jeder der Operatoren und Operanden der definierten mathematischen Operation mit einem autorisierten Operator oder Operanden übereinstimmt, der in der ersten Nichtflüchtigspeicherzone gespeichert ist, und
- das Ergebnis der ausgeführten mathematischen Operation an die Zusatzeinheit durch den Zusatzeinheitsanschluss übertragen kann.

4. Modul nach Anspruch 3, wobei das elektronische Modul außerdem eine Schnittstelle (38) aufweist, die das elektronische Modul direkt mit dem Lastwagenbus (4) verbindet, wobei die Schnittstelle nur Daten an dem Bus lesen kann, ohne Daten an diesen Bus übertragen zu können.

5. Modul nach Anspruch 3 oder 4, bei dem die erste Liste nur aus booleschen Operatoren und Schwellen-Komparatoren zusammengesetzt ist.

6. Modul nach einem der Ansprüche 3 bis 5, wobei das Modul außerdem einen Konfigurationsanschluss (70) für eine Verbindung und alternativ eine Trennung des Konfigurationscomputers mit/von dem elektronischen Bodybuilder-Modul umfasst.

7. Modul nach einem der Ansprüche 3 bis 6, wobei das Modul außerdem einen Stecker (30) für eine Verbindung und alternativ eine Trennung des Moduls mit/von dem Lastwagen-Bus umfasst.

8. Modul nach einem der Ansprüche 3 bis 7, bei dem der Zusatzeinheitsanschluss (44) auch Daten von der Zusatzeinheit empfangen kann, und bei dem die zweite vorherbestimmte Liste von Operanden auch einen Operanden umfasst, der den Daten entspricht, die durch den Eingangsstift empfangen werden.

9. Modul nach einem der Ansprüche 3 bis 8, bei dem die zweite Nichtflüchtigspeicherzone (66) Informationen speichert, die eine Schwelle definieren, und bei dem der Mikroprozessor die an dem Bus gelesenen Daten mit der definierten Schwelle vergleichen kann.

10. Modul nach einem der Ansprüche 3 bis 9, bei dem das Modul wenigstens eine konfigurierbare Verzögerungsleitung (50, 52) umfasst, die die Daten, die an dem Bus oder durch den Zusatzeinheitsanschluss gelesen werden, um eine konfigurierbare Zeitverzögerung verzögern kann, und bei dem die zweite Nichtflüchtigspeicherzone (66) Informationen aufweist, die die in der Konfigurationsleitung verwendete Zeitverzögerung definieren.

11. Modul nach einem der Ansprüche 3 bis 10, bei dem der Zusatzeinheitsanschluss ein Stecker ist, der die Zusatzeinheit alternativ verbinden und trennen kann.

12. Verfahren zur Konfigurierung eines elektronischen Bodybuilder-Moduls eines Lastwagens, wobei das Verfahren umfasst:
- Versehen des elektronischen Bodybuilder-Moduls mit
• einem Zusatzeinheitsanschluss (44) für einen Anschluss einer Zusatzeinheit, die aus einer Vielzahl von verschiedenen Zusatzeinheiten ausgewählt wird, die an diesem Lastwagen eingebaut werden können, wobei jede Zusatzeinheit eine Zusatzausstattung antreiben kann, die dem Lastwagen nach seiner Konstruktion hinzugefügt worden ist, wobei dieser Zusatzeinheitsanschluss an die Zusatzeinheit Informationen über den Betriebszustand des Lastwagens übertragen kann, die aus den Daten aufgebaut sind, die an dem Bus gelesen werden,
• einer ersten Nichtflüchtigspeicherzone (62), deren Inhalt nicht durch den Konfigurationsanschluss modifiziert werden kann, wobei die erste Nichtflüchtigspeicherzone eine erste vorherbestimmte Liste autorisierter mathematischer Operatoren und eine zweite vorherbestimmte Liste einer Vielzahl von autorisierten Operanden speichert, wobei jeder Operand Daten entspricht, die durch eine der elektronischen Steuereinheiten oder einen der Sensoren erzeugt werden,
• einer zweiten Nichtflüchtigspeicherzone (66), deren Inhalt durch den Konfigurationsanschluss modifiziert werden kann, wobei die zweite Nichtflüchtigspeicherzone Informationen speichert, die eine mathematische Operation definieren, wobei die mathematische Operation von einer Kombination aus Operatoren und Operanden gebildet wird, und
• einem Mikroprozessor (94), der
- die mathematische Operation, die durch die in der zweiten Nichtflüchtigspeicherzone gespeicherten Informationen definiert ist, nur ausführen kann, wenn jeder der Operatoren und Operanden der definierten mathematischen Operation mit einem autorisierten Operator oder Operanden übereinstimmt, der in der ersten Nichtflüchtigspeicherzone gespeichert ist, und
- das Ergebnis der ausgeführten mathematischen Operation an die Zusatzeinheit durch den Zusatzeinheitsanschluss übertragen kann,
wobei das Verfahren umfasst
- Anzeigen mathematischer Operatoren und Operanden in jeweiligen Listenbereichen, wobei jeder Listenbereich nur mit den autorisierten mathematischen Operatoren bzw. Operanden besetzt ist,
- Beschaffen des Operators oder des Operanden, der durch einen Operator in dem Listenbereich zur Definierung einer mathematischen Operation gewählt wurde, und
- Downloaden der definierten mathematischen Operation in die zweite Nichtflüchtigspeicherzone von einem Computer, der über den Konfigurationsanschluss mit dem Modul verbunden ist.

13. Speicher (88) mit Instruktionen zur Ausführung eines Verfahrens nach Anspruch 12 zur Konfigurierung eines elektronischen Bodybuilder-Moduls eines Lastwagens, wenn die Instruktionen durch einen Computer ausgeführt werden.

14. Software mit Instruktionen zur Ausführung eines Verfahrens nach Anspruch 12 zur Konfigurierung eines elektronischen Bodybuilder-Moduls eines Lastwagens, wenn die Instruktionen durch einen Computer ausgeführt werden.

## Revendications

1. Camion comprenant:
- une pluralité d'unités de contrôle électronique (6,8) capables de contrôler des actionneurs du camion et/ou des capteurs, les unités de contrôle étant capables de générer des données respectives qui représentent l'état opératoire du camion,
- un bus (4) reliant ensemble les unités de contrôle électronique et les capteurs,
- un module électronique carrossier (20) connecté au bus, le module électronique comprenant une connexion d'unité auxiliaire (44) pour connecter une unité auxiliaire (24) choisie parmi une pluralité d'unités auxiliaires différentes qui peuvent être installées sur ce camion, chaque unité auxiliaire étant capable de piloter un équipement auxiliaire ajouté au camion après sa construction, cette connexion étant capable de transmettre, à l'unité auxiliaire, de l'information sur l'état opératoire du camion qui est construite à partir de données lues sur le bus, et
- une connexion de configuration (70) pour connecter et, alternativement, pour déconnecter un ordinateur de configuration au module électronique carrossier,
dans lequel le camion comporte de plus :
- une première zone de mémoire non-volatile (62), dont le contenu ne peut pas être modifié au travers de la connexion de configuration, la première zone de mémoire non-volatile stockant une première liste prédéterminée d'opérateurs mathématiques autorisés et une seconde liste prédéterminée d'opérandes autorisés, chaque opérande correspondant à une donnée générée par une des unités de contrôle électronique ou un des capteurs,
- une seconde zone de mémoire non-volatile (66) dont le contenu peut être modifié au travers de la connexion de configuration, la seconde zone de mémoire non-volatile stockant de l'information définissant une opération mathématique, l'opération mathématique étant formée d'une combinaison d'opérateurs et d'opérandes,
- un microprocesseur (94) capable :
- d'exécuter l'opération mathématique définie par l'information stockée dans la second zone de mémoire non-volatile seulement si chacun des opérateurs et des opérandes de l'opération mathématique définie correspond à un opérateur ou un opérande autorisé stocké dans la première zone de mémoire non-volatile, et
- de transmettre le résultat de l'opération mathématique à une unité auxiliaire au travers de la connexion d'unité auxiliaire.

2. Le camion selon la revendication 1, dans lequel le bus (4) est un bus CAN (Controller Area Network).

3. Un module électronique carrossier capable d'être mis en oeuvre dans un camion selon l'une quelconque des revendications précédentes, dans lequel le module comporte :
- une connexion d'unité auxiliaire (44) pour connecter une unité auxiliaire (24) choisie parmi une pluralité d'unités auxiliaires différentes qui peuvent être installées sur ce camion, chaque unité auxiliaire étant capable de piloter un équipement auxiliaire (26) ajouté au camion après sa construction, cette connexion étant capable de transmettre, à l'unité auxiliaire, de l'information sur l'état opératoire du camion qui est construite à partir de données lues sur le bus,
- une première zone de mémoire non-volatile (62), dont le contenu ne peut pas être modifié au travers de la connexion de configuration, la première zone de mémoire non-volatile stockant une première liste prédéterminée d'opérateurs mathématiques autorisés et une seconde liste prédéterminée d'opérandes autorisés, chaque opérande correspondant à une donnée générée par une des unités de contrôle électronique ou un des capteurs,
- une seconde zone de mémoire non-volatile (66) dont le contenu peut être modifié au travers de la connexion de configuration, la seconde zone de mémoire non-volatile stockant de l'information définissant une opération mathématique, l'opération mathématique étant formée d'une combinaison d'opérateurs et d'opérandes,
- un microprocesseur (94) capable :
- d'exécuter l'opération mathématique définie par l'information stockée dans la second zone de mémoire non-volatile seulement si chacun des opérateurs et des opérandes de l'opération mathématique définie correspond à un opérateur ou un opérande autorisé stocké dans la première zone de mémoire non-volatile, et
- de transmettre le résultat de l'opération mathématique à une unité auxiliaire au travers de la connexion d'unité auxiliaire.

4. Le module selon la revendication 3, dans lequel le module électronique comporte aussi une interface (38) pour connecter directement le module électronique au bus (4) du camion, cette interface étant seulement capable de lire des données sur le bus sans être capable de transmettre des données sur ce bus.

5. Le module selon les revendications 3 ou 4, dans lequel la première liste est uniquement composée d'opérateurs booléens et de comparateurs de seuils.

6. Le module selon l'une quelconque des revendications 3 à 5, dans lequel le module comporte aussi une connexion de configuration (70) pour connecter et, alternativement, déconnecter l'ordinateur de configuration au module électronique carrossier.

7. Le module selon l'une quelconque des revendications 3 à 6, dans lequel le module comporte aussi une prise (30) pour connecter et, alternativement, déconnecter le module du/au camion.

8. Le module selon l'une quelconque des revendications 3 à 7, dans lequel la connexion d'unité auxiliaire (44) est aussi capable de recevoir des données de l'unité auxiliaire, et dans lequel la seconde liste prédéterminée d'opérandes inclut aussi un opérande correspondant aux données reçues au travers de la broche d'entrée.

9. Le module selon l'une quelconque des revendications 3 à 8, dans lequel la seconde zone de mémoire non-volatile (66) stocke de l'information définissant un seuil, et dans lequel le microprocesseur est capable de comparer des données lues sur le bus au seuil défini.

10. Le module selon l'une quelconque des revendications 3 à 9, dans lequel le module comporte au moins une temporisation configurable (50, 52) capable de retarder les données lues sur le bus ou au travers de la connexion d'unité auxiliaire d'un délai configurable, et dans lequel la seconde zone de mémoire non-volatile (66) inclut de l'information définissant le délai utilisé dans la temporisation.

11. Le module selon l'une quelconque des revendications 3 à 10, dans lequel la connexion d'unité auxiliaire est une prise capable de connecter et, alternativement, déconnecter, l'unité auxiliaire.

12. Une méthode pour configurer un module électronique carrossier d'un camion, la méthode comprenant :
- la fourniture du module électronique carrossier avec :
• une connexion d'unité auxiliaire (44) pour connecter une unité auxiliaire (24) choisie parmi une pluralité d'unités auxiliaires différentes qui peuvent être installées sur ce camion, chaque unité auxiliaire étant capable de piloter un équipement auxiliaire ajouté au camion après sa construction, cette connexion étant capable de transmettre, à l'unité auxiliaire, de l'information sur l'état opératoire du camion qui est construite à partir de données lues sur le bus,
• une première zone de mémoire non-volatile (62), dont le contenu ne peut pas être modifié au travers de la connexion de configuration, la première zone de mémoire non-volatile stockant une première liste prédéterminée d'opérateurs mathématiques autorisés et une seconde liste prédéterminée d'opérandes autorisés, chaque opérande correspondant à une donnée générée par une des unités de contrôle électronique ou un des capteurs,
• une seconde zone de mémoire non-volatile (66) dont le contenu peut être modifié au travers de la connexion de configuration, la seconde zone de mémoire non-volatile stockant de l'information définissant une opération mathématique, l'opération mathématique étant formée d'une combinaison d'opérateurs et d'opérandes,
• un microprocesseur (94) capable :
- d'exécuter l'opération mathématique définie par l'information stockée dans la second zone de mémoire non-volatile seulement si chacun des opérateurs et des opérandes de l'opération mathématique définie correspond à un opérateur ou un opérande autorisé stocké dans la première zone de mémoire non-volatile, et
- de transmettre le résultat de l'opération mathématique à une unité auxiliaire au travers de la connexion d'unité auxiliaire,
dans laquelle la méthode comporte :
- l'affichage des opérateurs mathématiques et des opérandes dans des zones de listes respectives, chaque liste étant peuplée seulement des operateurs mathématiques et des opérandes autorisés, respectivement,
- l'acquisition de l'operateur et de l'opérande sélectionné par un opérateur dans la zone de liste pour définir une opération mathématique, et
- le téléchargement de l'opération mathématique définie dans la seconde zone de mémoire non-volatile depuis un ordinateur connecté au module au travers de la connexion de configuration.

13. Une mémoire (88) incluant des instructions pour exécuter une méthode selon la revendication 12, pour configurer un module électronique carrossier d'un camion lorsque les instructions sont exécutées par un ordinateur.

14. Un logiciel incluant des instructions pour exécuter une méthode selon la revendication 12, pour configurer un module électronique carrossier d'un camion lorsque les instructions sont exécutées par un ordinateur.
